# EUROPEAN PATENT APPLICATION

(11) **EP 3 675 261 A1**
(43) Date of publication of application: **01.07.2020**
(21) Application number: 18865195.4
(22) Date of filing: 21.09.2018
(51) Int. Cl.: H01M 10/04, H01G 11/20, H01G 11/84, H01M 2/36, H01M 4/62, H01M 10/058

(54) **METHOD FOR PRODUCING POWER STORAGE ELEMENT AND POWER STORAGE ELEMENT**

(30) Priority: 06.10.2017 JP 2017196164
(71) Applicant: GS Yuasa International Ltd., Kyoto-shi, Kyoto 601-8520 (JP)
(72) Inventor: INAMASU, Tokuo, Kyoto-shi Kyoto 601-8520 (JP); OKUYAMA, Ryoichi, Kyoto-shi Kyoto 601-8520 (JP)
(74) Representative: Isarpatent
(86) International application number: PCT/JP2018/034946
(87) International publication number: WO 2019/069705

(57) **Abstract**

A method for producing an energy storage device 1 including an electrode assembly having a positive electrode containing an active material, a separator, and a negative electrode containing an active material, an electrolyte solution, and an outer case 11, includes a step of storing the electrode assembly in the outer case 11, a step of drying the electrode assembly through an electrolyte solution filling hole 21 formed in the outer case 11 by arranging the energy storage device 1 in a space for drying, and a step of filling the electrolyte solution into the outer case 11 through the electrolyte solution filling hole 21.

## Description

### TECHNICAL FIELD

The present invention relates to an energy storage device including an electrode assembly, and a method for producing an energy storage device.

### BACKGROUND ART

Energy storage devices such as lithium ion secondary batteries have been used as power supplies for mobile devices such as notebook computers and mobile phones. In recent years, energy storage devices have been used in a wide range of fields such as power supplies for EVs (electric vehicles), HEVs (hybrid electric vehicles), and PHEVs (plug-in hybrid electric vehicles).

Generally, in an energy storage device, an electrode assembly formed by stacking or winding a positive electrode plate and a negative electrode plate via a separator is hermetically stored in a metal can case together with an electrolyte solution. A positive electrode terminal and a negative electrode terminal electrically connected to the electrode assembly are provided on a cover plate of the case. The electrode assembly may be stored in a case made of a laminate film.

The positive electrode plate and the negative electrode plate are formed, for example, by applying and drying a mixture dispersion in which fine particles of an electrode active material and a binder are dispersed in an organic solvent on a metal foil, as described in JP-A-2014-207079. When water is contained in the active material layer, the internal resistance of the energy storage device increases, so that the positive electrode plate and the negative electrode plate are fully dried so that the water in the active material layer can be completely removed before use. Generally, the positive electrode plate and the negative electrode plate are individually heated in order to efficiently dry the active material layer.

### PRIOR ART DOCUMENT

### PATENT DOCUMENT

Patent Document 1: JP-A-2014-207079

### SUMMARY OF THE INVENTION

### PROBLEMS TO BE SOLVED BY THE INVENTION

Energy storage devices such as lithium ion secondary batteries are required to further improve productivity in order to reduce costs.

An object of the present invention is to provide a method for producing an energy storage device with high productivity and an energy storage device.

### MEANS FOR SOLVING THE PROBLEMS

A method for producing an energy storage device including an electrode assembly having a positive electrode containing an active material, a separator, and a negative electrode containing an active material, an electrolyte solution, and an outer case, according to the present invention, includes a step of storing the electrode assembly in the outer case; a drying step of drying the electrode assembly through an electrolyte solution filling hole formed in the outer case by arranging the energy storage device in a space for drying; and a step of filling the electrolyte solution into the outer case through the electrolyte solution filling hole.

The energy storage device according to the present invention includes an electrode assembly having a positive electrode containing an active material, a separator, and a negative electrode containing an active material, an electrolyte solution, and an outer case, and the negative electrode contains a gas absorbing material, the outer case has an electrolyte solution filling hole for filling the electrolyte solution, and the gas absorbing material is dried from the outside of the outer case through the electrolyte solution filling hole.

### ADVANTAGES OF THE INVENTION

According to the method for producing an energy storage device of the present invention, an electrode assembly is dried in a state where an electrode assembly is stored in an outer case. Productivity of the energy storage device can be greatly improved, as compared with the conventional production method in which a positive electrode and a negative electrode are individually wound into a roll and dried, and an electrode assembly formed by stacking the dried positive electrode and negative electrode and a separator is stored in an outer case.

According to the energy storage device of the present invention, a gas absorbing material contained in the negative electrode is fully dried before electrolyte solution filling. Therefore, the gas absorbing material can fully exhibit a function of absorbing gas generated in the outer case accompanying charge-discharge of the energy storage device.

### BRIEF DESCRIPTION OF THE DRAWINGS

Fig. 1 is a perspective view of an energy storage device according to a first embodiment.
Fig. 2 is a sectional view taken along line II-II of Fig. 1.
Fig. 3 is a sectional view taken along line III-III of Fig. 1.
Fig. 4 is a cross-sectional view of an energy storage device of a second embodiment.
Fig. 5 is a perspective view of an energy storage device of a third embodiment.
Fig. 6 is a sectional view taken along line VI-VI of Fig. 5.

### MODE FOR CARRYING OUT THE INVENTION

### (Overview of Present Embodiment)

A method for producing an energy storage device including an electrode assembly having a positive electrode containing an active material, a separator, and a negative electrode containing an active material, an electrolyte solution, and an outer case, of the present embodiment, includes a step of storing the electrode assembly in the outer case; a drying step of drying the electrode assembly through an electrolyte solution filling hole formed in the outer case by arranging the energy storage device in a space for drying; and a step of filling the electrolyte solution into the outer case through the electrolyte solution filling hole.

According to the above configuration, an electrode assembly is dried in a state where the electrode assembly is stored in an outer case, unlike the conventional production method in which a positive electrode and a negative electrode are individually wound into a roll and dried, and the electrode assembly formed by stacking the dried positive electrode and negative electrode and a separator is stored in an outer case. When a conventional drying step in which a positive electrode and a negative electrode are individually wound into a roll and dried is adopted, a step of forming an electrode assembly after the drying step and a step of storing the electrode assembly in an outer case need to be performed, for example, in a dry room. On the other hand, according to the above configuration, an electrode assembly is dried in a state where the electrode assembly is stored in an outer case, and after the drying step, the electrolyte solution is filled into the outer case while the electrode assembly is stored in the outer case. Since the number of steps can be reduced and the necessity of work in a dry room can be reduced, productivity of the energy storage device can be greatly improved.

In the above-described method for producing an energy storage device, in the drying step, a gas absorbing material provided in the outer case is preferably dried at the same time as the electrode assembly is dried.

According to the above configuration, in the drying step, gas absorbed by the gas absorbing material is removed and activation is performed, then the electrolyte solution is filled. In the conventional production method, when the electrode assembly is stored in the outer case after the drying step, gas present in the outer case may be absorbed by the gas absorbing material. On the other hand, according to the above configuration, unintended gas absorption into the gas absorbing material is suppressed.

In the above-described method for producing an energy storage device, the gas absorbing material preferably releases the absorbed gas at a temperature of 100°C or more and less than 120°C.

According to the above configuration, the gas absorbing material can be fully dried at a relatively low temperature, so that components such as a separator contained in the electrode assembly are not deteriorated due to alteration.

In the above-described method for producing an energy storage device, in the drying step, after raising the temperature of the negative electrode to 100°C or more using air or nitrogen, the electrode assembly is preferably dried in a state of a reduced pressure of an atmospheric pressure or less.

According to the above configuration, by heating and depressurizing the outer case, release of water, adsorbed gas and the like can be promoted, and drying time is shortened.

The energy storage device of the present embodiment includes an electrode assembly having a positive electrode containing an active material, a separator, and a negative electrode containing an active material, an electrolyte solution, and an outer case, and the negative electrode contains a gas absorbing material, the outer case has an electrolyte solution filling hole for filling the electrolyte solution, and the gas absorbing material is dried from the outside of the outer case through the electrolyte solution filling hole.

According to the above configuration, since the gas absorbing material of the negative electrode is dried before filling of the electrolyte solution, the gas absorbing material can well exhibit a function of absorbing gas generated in the outer case accompanying charge-discharge of the energy storage device.

In the above-described energy storage device, the gas absorbing material preferably releases the absorbed gas at a temperature of 100°C or more and less than 120°C.

According to the above configuration, since the gas absorbing material can be fully dried at a relatively low temperature, the separator does not shut down when the electrode assembly is heated and dried from the outside of the outer case.

Hereinafter, the present invention will be specifically described with reference to the drawings showing embodiments thereof.

### (First Embodiment)

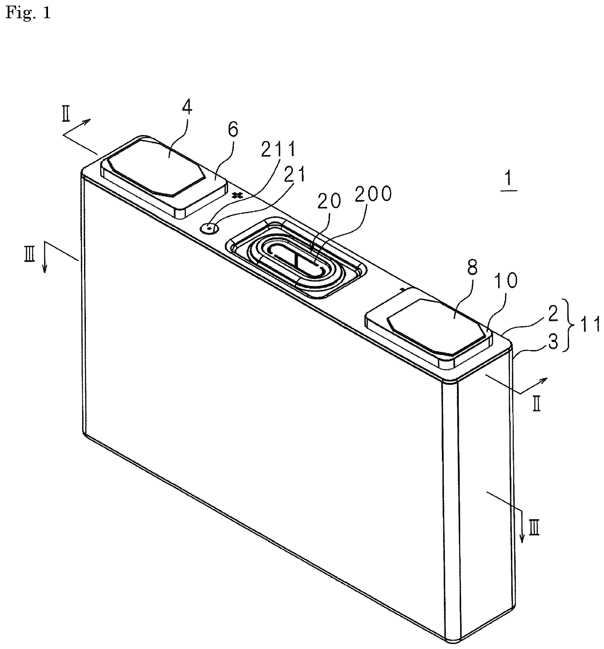

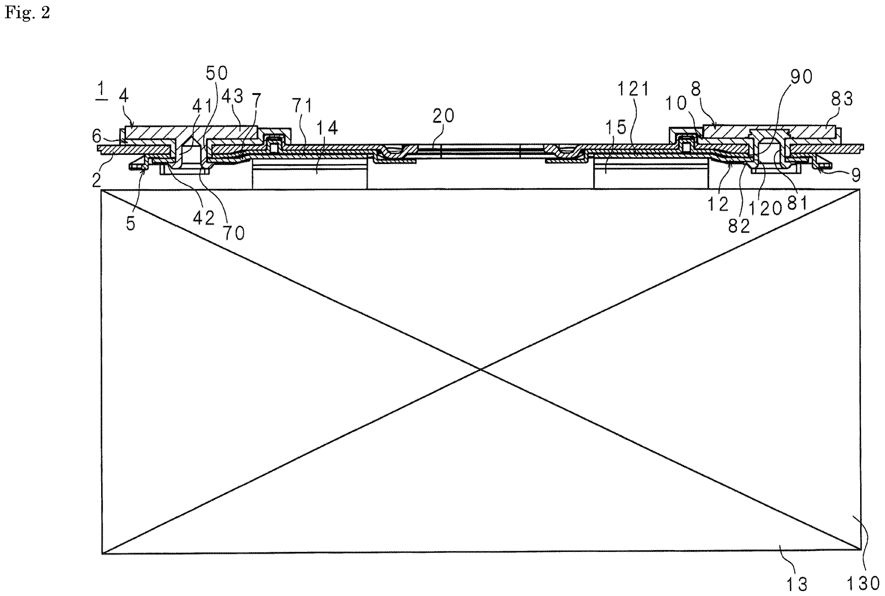

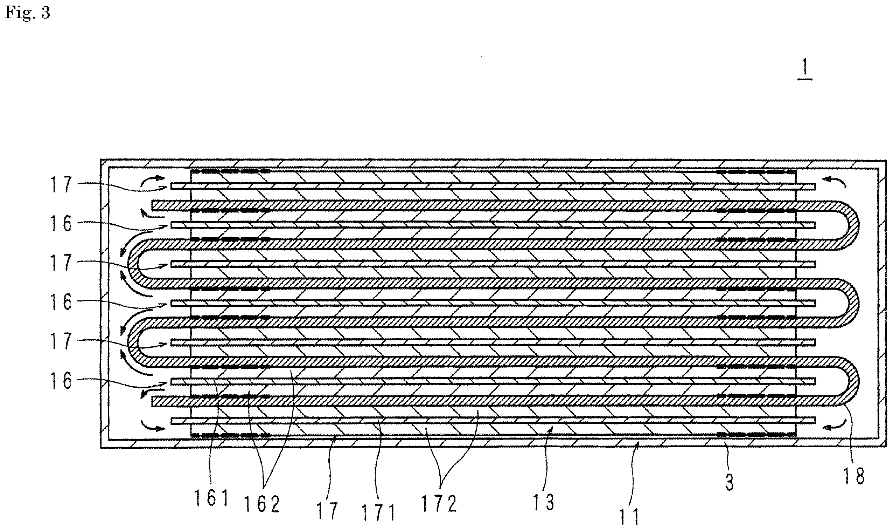

Fig. 1 is a perspective view of an energy storage device 1 according to a first embodiment, Fig. 2 is a sectional view taken along line II-II of Fig. 1, and Fig. 3 is a sectional view taken along line III-III of Fig. 1. Hereinafter, a case where an energy storage device 1 is a lithium ion secondary battery will be described, but the energy storage device 1 is not limited to a lithium ion secondary battery.

As shown in Fig. 1, the energy storage device 1 includes a case 11 having a cover plate 2 and a case body 3, a positive electrode terminal 4, a negative electrode terminal 8, gaskets 6, 10, a rupture valve 20, and an electrolyte solution filling hole 21 closed with a plug 211.

The case 11 is made of, for example, a metal such as aluminum, an aluminum alloy and stainless steel, or a synthetic resin, has a rectangular parallelepiped shape, and stores an electrode assembly 13 (see Fig. 2) and an electrolyte solution (not shown).

As shown in Fig. 2, the energy storage device 1 further includes insulating plates 5, 9, current collectors 7, 12, and an electrode assembly 13. The positive electrode terminal 4 has a shaft portion 41 penetrating the cover plate 2, a swaged portion 42 formed by swaging one end of the shaft portion 41, and a plate portion 43 provided at the other end of the shaft portion 41.

The gasket 6 is made of, for example, a synthetic resin such as polyphenylene sulfide (PPS) or polypropylene (PP). The positive electrode terminal 4 is provided so as to penetrate the cover plate 2 in a state where an inner surface of the plate portion 43 and the shaft portion 41 are covered with the gasket 6 and insulated.

The insulating plate 5 is made of, for example, a synthetic resin such as PPS or PP, and includes an insertion hole 50 through which an end of the shaft portion 41 is inserted.

The current collector 7 has a plate shape and is made of, for example, aluminum, and is arranged on an inner surface of the cover plate 2 and has an insertion hole 70 through which the end of the shaft portion 41 is inserted. In addition, the current collector 7 has a joint portion 71 for joining a positive electrode tab 14 at a central side of the cover plate 2.

The negative electrode terminal 8 has a shaft portion 81 penetrating the cover plate 2, a swaged portion 82 formed by swaging one end of the shaft portion 81, and a plate portion 83 provided at the other end of the shaft portion 81. The negative electrode terminal 8 is provided so as to penetrate the cover plate 2 in a state where an inner surface of the plate portion 83 and the shaft portion 81 are covered with the gasket 10 made of, for example, PPS or PP, and insulated.

The insulating plate 9 is made of, for example, a synthetic resin such as PPS or PP, and includes an insertion hole 90 through which an end of the shaft portion 81 is inserted.

The current collector 12 has a plate shape and is made of, for example, copper, and is arranged on an inner surface of the cover plate 2 and has an insertion hole 120 through which the end of the shaft portion 81 is inserted. In addition, the current collector 12 has a joint portion 121 for joining a negative electrode tab 15 at a central side of the cover plate 2.

As shown in Figs. 2 and 3, the electrode assembly 13 is a stacked type having a main body 130 in which a plurality of positive electrode plates 16 and negative electrode plates 17 are alternately stacked via a separator 18 to form a rectangular parallelepiped, and a positive electrode tab 14 and a negative electrode tab 15 extending from the main body 130 toward the cover plate 2. The positive electrode tab 14 is joined to the joint portion 71 of the current collector 7. The negative electrode tab 15 is joined to the joint portion 121 of the current collector 12.

The electrode assembly 13 may be a wound type obtained by winding a long positive electrode plate 16 and a long negative electrode plate 17 in a flat shape via a separator 18.

As shown in Fig. 3, the positive electrode plate 16 has a structure in which a positive electrode layer 162 is formed on both surfaces of a substrate 161 which is a rectangular metal foil made of aluminum, an aluminum alloy, or the like. The positive electrode layer 162 contains a positive active material.

The negative electrode plate 17 has a structure in which a negative electrode layer 172 is formed on both surfaces of a substrate 171 which is a rectangular metal foil. Examples of the material of the substrate 171 include metal materials such as copper, copper alloy, nickel, stainless steel, nickel-plated steel, and chromium-plated steel. The negative electrode layer 172 contains a negative active material and a gas absorbing material.

To the positive electrode layer 162 and the negative electrode layer 172, a conductive agent, a binder, a thickener, a filler and the like may be added.

The electrode plates at both ends (in the outermost layer) in the stacking direction of the electrode assembly 13 are the negative electrode plates 17.

The separator 18 is a microporous sheet. The separator 18 may have a sheet-like porous resin layer and a heat-resistant layer (or an oxidation-resistant layer) formed at least on a surface of this porous resin layer facing the positive electrode plate 16. The separator 18 may have a shutdown function.

As a main component of the porous resin layer of the separator 18, for example, polyolefin derivatives such as polyethylene, polypropylene, ethylene-vinyl acetate copolymer, ethylene-methyl acrylate copolymer, ethylene-ethyl acrylate copolymer and chlorinated polyethylene, polyolefins such as ethylene-propylene copolymer and polyesters such as polyethylene terephthalate and copolymerized polyester can be adopted. Among them, as the main component of the porous resin layer, polyethylene and polypropylene excellent in electrolyte resistance and durability are preferably used. The "main component" means a component having the largest mass content.

The lower limit of the average thickness of the porous resin layer is preferably 5 pm, and more preferably 10 pm. On the other hand, the upper limit of the average thickness of the porous resin layer is preferably 30 pm, and more preferably 20 pm. By setting the average thickness of the porous resin layer to be greater than or equal to the lower limit, sufficient strength of the separator 18 can be secured. Further, by setting the average thickness of the porous resin layer to be less than or equal to the upper limit, the energy density of the electrode assembly 13 can be increased.

The oxidation-resistant layer of the separator 18 is a layer provided to prevent the porous resin layer from being oxidized and deteriorated, and contains a large number of inorganic particles and a binder connecting the inorganic particles.

Examples of a main component of the inorganic particles include oxides such as alumina, silica, zirconia, titania, magnesia, ceria, yttria, zinc oxide and iron oxide, nitrides such as silicon nitride, titanium nitride and boron nitride, silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, and the like. Among them, alumina, silica, and titania are particularly preferable as the main component of the inorganic particles of the oxidation-resistant layer. The oxidation-resistant layer may contain a gas absorbing material described below.

The lower limit of the average particle size of the inorganic particles of the oxidation-resistant layer is preferably 1 nm, and more preferably 7 nm. On the other hand, the upper limit of the average particle size of the inorganic particles is preferably 5 µm, and more preferably 1 µm. When the average particle size of the inorganic particles is greater than or equal to the lower limit, the ratio of the binder in the oxidation-resistant layer can be reduced, and heat resistance of the oxidation-resistant layer can be increased. Also, by setting the average particle size of the inorganic particles to be less than or equal to the upper limit, a uniform oxidation-resistant layer can be formed. The "average particle size" refers to a value measured according to JIS-670 using a transmission electron microscope (TEM) or a scanning electron microscope (SEM).

Examples of a main component of the binder of the oxidation-resistant layer include fluorine resins such as polyvinylidene fluoride and polytetrafluoroethylene, fluorine rubber such as vinylidene fluoride-hexafluoropropylene-tetrafluoroethylene copolymer, synthetic rubbers such as styrene-butadiene copolymer and its hydride, acrylonitrile-butadiene copolymer and its hydride, acrylonitrile-butadiene-styrene copolymer and its hydride, methacrylate-acrylate copolymer, styrene-acrylate copolymer and acrylonitrile-acrylate copolymer, cellulose derivatives such as carboxymethylcellulose, hydroxyethylcellulose and ammonium salt of carboxymethylcellulose, polyimides such as polyetherimide, polyamideimide, polyamide and their precursors (such as polyamic acid), ethylene-acrylic acid copolymers such as ethylene-ethyl acrylate copolymer, polyvinyl alcohol, polyvinyl butyral, polyvinylpyrrolidone, polyvinyl acetate, polyurethane, polyphenylene ether, polysulfone, polyether sulfone, polyphenylene sulfide, polyester, and the like.

The lower limit of the average thickness of the oxidation-resistant layer is preferably 2 pm, and more preferably 4 pm. On the other hand, the upper limit of the average thickness of the oxidation-resistant layer is preferably 6 pm, and more preferably 5 pm. By setting the average thickness of the oxidation-resistant layer to be greater than or equal to the lower limit, the oxidation-resistant layer can be prevented from being broken when the separator 18 is bonded and fixed. Further, by setting the average thickness of the oxidation-resistant layer to be less than or equal to the upper limit, increase in the thickness of the separator 18 can be suppressed, and the energy density of the electrode assembly 13 and thus the energy storage device 1 can be increased.

The positive electrode tabs 14 project from a part of one side of the substrate 161, and the positive electrode tabs 14 of all the positive electrode plates 16 are overlapped and joined to the joint portion 71.

The negative electrode tabs 15 project from a part of one side of the substrate 171, and the negative electrode tabs 15 of all the negative electrode plates 17 are overlapped and joined to the joint portion 121.

As the positive active material contained in the positive electrode layer 162 or the negative active material used for the negative electrode layer 172, an appropriate known material can be used as long as it is a positive active material or negative active material capable of absorbing and desorbing lithium ions.

As the positive active material, for example, a polyanion compound such as LiMPO₄, LiM₂SiO₄ or LiMBO₃ (M is one or two or more transition metal elements selected from Fe, Ni, Mn, Co and the like), a spinel compound such as lithium titanate or lithium manganese oxide, a lithium transition metal oxide such as LiMO2 (M is one or two or more transition metal elements selected from Fe, Ni, Mn, Co and the like) or the like can be used.

Examples of the negative active material include hardly graphitizable carbon (hard carbon), amorphous carbon such as easily graphitizable carbon (soft carbon), graphite, alloys of metals such as Al, Si, Pb, Sn, Zn and Cd and lithium, tungsten oxide, molybdenum oxide, silicon oxide, iron sulfide, titanium sulfide, lithium titanate, and the like.

The gas absorbing material is preferably a carbon material containing active carbon or carbon black, and/or a zeolite. In this case, when the energy storage device 1 is produced, the gas absorbed in the gas absorbing material can be removed in a relatively low temperature drying step.

The active carbon is made of a material containing carbon as a main component, such as charcoal, coconut shell, coal, and carbonized organic synthetic fibers. By subjecting them to an activation treatment, many holes are formed to a deep position.

The specific surface area of the active carbon is preferably from 800 to 2000 m²/g. Further, the active carbon preferably has a pore diameter of 0.3 to 1.5 nm. The pores of 0.3 to 1.5 nm are more preferably 60% or more, and further preferably 80% or more of all pores.

The gas absorbing material is added according to the amount of gas generated accompanying a charge-discharge reaction. It is preferable to add 1 to 3 g of the gas absorbing material to the negative electrode layer 172 of the negative electrode plate 17 with respect to 100 ml of the amount of gas generated. In this case, it is preferable to add 0.1 to 5% to a negative electrode mixture described later. When 0.1 to 5% is added to the negative electrode mixture, gas can be efficiently absorbed, and battery characteristics and the like are not affected. The gas absorbing material can be formed in a flake shape, a spherical shape, a rod shape, a plate shape, or a sheet shape.

The nonaqueous solvent and electrolyte salt of the electrolyte solution are not limited, and those that are generally proposed to be used in lithium ion secondary batteries and the like can be used.

Examples of the nonaqueous solvent include, but are not limited to, cyclic carbonates such as propylene carbonate, ethylene carbonate, butylene carbonate, chloroethylene carbonate, 4-fluoroethylene carbonate and vinylene carbonate; cyclic esters such as γ-butyrolactone and γ-valerolactone; chain carbonates such as dimethyl carbonate, diethyl carbonate and ethylmethyl carbonate; chain esters such as methyl formate, methyl acetate and methyl butyrate; tetrahydrofuran or derivatives thereof; ethers such as 1,3-dioxane, 1,4-dioxane, 1,2-dimethoxyethane, 1,4-dibutoxyethane and methyl diglyme; nitriles such as acetonitrile and benzonitrile; dioxolane or derivatives thereof; and ethylene sulfide, sulfolane, sultone or derivatives thereof alone or mixtures of two or more thereof, and the like.

The electrolyte solution may contain an additive.

Hereinafter, a method for producing the energy storage device 1 will be described.

First, the positive electrode plate 16 and the negative electrode plate 17 are prepared.

When the negative electrode plate 17 is produced, the above-described negative active material and gas absorbing material are mixed to form a negative electrode mixture.

The negative electrode mixture is mixed with an organic solvent such as N-methylpyrrolidone or toluene or water to prepare a negative electrode paste.

The negative electrode paste is applied to a long strip-shaped base material of the substrate 171 in an arbitrary thickness and shape. Alternatively, the negative electrode paste is pressure-bonded to the substrate 171. The application can be performed by means of, for example, roller coating such as an applicator roll, screen coating, doctor blade method, spin coating, bar coater, or the like.

The solvent is volatilized by drying at a temperature of about 50°C to 120°C for about 5 minutes to 10 minutes.

The density and thickness are adjusted by roll pressing and compression-molded, and a negative electrode plate 17 having a predetermined size is cut out from the base material.

The positive electrode plate 16 is prepared by applying the positive electrode paste to the substrate 161, drying the positive electrode paste, and adjusting the density and thickness by roll pressing.

The negative electrode plate 17 and the positive electrode plate 16 are alternately arranged via the separator 18, and the positive electrode layer 162 and the negative electrode layer 172 are stacked so as to face each other with the separator 18 interposed therebetween, thereby preparing the electrode assembly 13 (stacking step). The method of stacking the positive electrode plate 16 and the negative electrode plate 17 is not limited to this method. In the stacking step, the positive electrode plate 16 and the negative electrode plate 17 that are not fully dried and contain water can be stacked.

The positive electrode tabs 14 of the respective positive electrode plates 16 are overlapped and joined to the joint portion 71, and the negative electrode tabs 15 of the respective negative electrode plates 17 are overlapped and joined to the joint portion 121, and as shown in Fig. 2, the electrode assembly 13 is connected to the cover plate 2. The electrode assembly 13 connected to the cover plate 2 is stored in the case body 3, and an edge of the cover plate 2 and an edge of an opening of the case body 3 are laser-welded (storage step). In the storage step, the method of sealing the case is not limited to laser welding.

The temperature of the negative electrode plate 17 (not the ambient temperature, but the temperature of the negative electrode plate 17 itself) is raised to 100°C or more using air or nitrogen.

The electrode assembly 13 is dried in a state of a reduced pressure of an atmospheric pressure or less by evacuation from the electrolyte solution filling hole 21. Water in the electrode assembly is removed through the electrolyte solution filling hole 21.

Examples of the heating space (heating means) include a heating furnace, a heat insulating room with a heater, and the like. Among them, it is preferable to use a depressible gas circulation heating furnace that has airtightness and can replace gas in the inside. The energy storage device 1 may be arranged in the heating space, and air in the heating space may be replaced with an inert gas. Specifically, first, the pressure in the heating space is reduced (evacuated) to reduce an oxygen concentration in the heating space, and subsequently, the air in the heating space can be efficiently replaced with an inert gas by introducing the inert gas into the heating space. The "inert gas" means a gas that does not react with metal even when heated. As the inert gas that replaces the air in the heating space, for example, nitrogen, carbon dioxide or the like can be used, and among them, nitrogen gas that is inexpensive and has high safety is particularly preferably used. By reducing the pressure in the heating space, release of water, adsorbed gas and the like can be promoted.

The upper limit of the oxygen concentration in the heating space after the replacement is preferably 100 ppm by volume, and more preferably 20 ppm by volume. By setting the oxygen concentration in the heating space after the replacement with the inert gas to be less than or equal to the upper limit, oxidation of a negative-electrode current collector substrate 171 and the like can be fully suppressed. On the other hand, the lower limit of the oxygen concentration in the heating space after the replacement is theoretically 0 ppm by volume.

The lower limit of the pressure in the heating space after the pressure reduction is preferably 5 Pa, and more preferably 10 Pa. The upper limit is preferably 100 Pa, and more preferably 50 Pa. By setting the pressure in the heating space after the pressure reduction to be greater than or equal to the lower limit, equipment cost for the pressure reduction can be suppressed. By setting the pressure in the heating space after the pressure reduction to be less than or equal to the upper limit, the release of water, an adsorbed gas and the like can be promoted, and the oxidation of the negative-electrode current collector substrate 171 and the like can be effectively suppressed.

Pressure reduction of the heating space may be performed before heating, but is preferably performed after heating to a certain temperature or more that is lower than the ultimate temperature. While the temperature is relatively low and oxidation of the negative-electrode current collector substrate 171 and the like is unlikely to proceed, the presence of gas around the layered product can promote heating of the layered product. On the other hand, after the temperature has been relatively high, the pressure of the atmosphere of the layered product is reduced so that the release of water, adsorbed gas and the like can be promoted, and the oxidation of the negative-electrode current collector substrate 171 and the like can be suppressed.

The temperature of the negative electrode plate 17 is set to 100°C or more and less than 120°C, and drying is performed for 10 minutes or more.

After drying, the electrolyte solution is filled from the electrolyte solution filling hole 21, and the electrolyte solution filling hole 21 is closed with the plug 211.

According to the above configuration, a gas generated by a decomposition reaction of a main solvent and the additive of the electrolyte solution can be absorbed by the gas absorbing material of the negative electrode layer 172. The gas generated and accumulated between the positive electrode layer 162 and the separator 18 can also absorb a gas that has passed through the separator 18, and the gas generated accompanying charge-discharge of the energy storage device 1 can be efficiently absorbed by the gas absorbing material. Since the gas generated accompanying the charge-discharge reaction is absorbed by the gas absorbing material, an increase in internal pressure of the energy storage device 1 can be suppressed. When configuring an energy storage apparatus by pressing a plurality of energy storage devices 1 from both ends in a direction in which the energy storage devices 1 are arranged in order to suppress expansion of the energy storage devices, the expansion of each energy storage device is small due to gas absorption by the gas absorbing material, thus compression force can be reduced. Since the configuration for pressing the plurality of energy storage devices from both ends can be simplified, the energy storage apparatus can be made compact and the energy density can be improved.

In the present embodiment, unlike the case where the positive electrode plate 16 and the negative electrode plate 17 are individually dried, the electrode assembly 13 having the positive electrode plate 16 and the negative electrode plate 17 is efficiently heated by heat from the outside of the case 11 so that the temperature rising rate can be increased. Therefore, a drying time including during pressure reduction and a cooling time can be shortened. The drying step is simplified, and the total number of steps is also reduced. The gas absorbed by the gas absorbing material is removed by drying, activation is performed and then the electrolyte solution is filled, so absorption of the gas that was present in the case 11 into the gas absorbing material is suppressed.

After the temperature is raised, the drying time is shortened by drying the electrode assembly 13 under reduced pressure.

After the energy storage device 1 is produced, gases such as H₂, CO, CO₂ and CH₄ are generated by the decomposition reaction of the main solvent and the additive of the electrolyte solution accompanying the charge-discharge reaction.

The gas tends to accumulate between the positive electrode layer 162 and the separator 18, as indicated by thick lines in Fig. 3. Although gas is also present at a center of the positive electrode plate 16, Fig. 3 shows only one in which gas is present at both ends of the positive electrode plate 16 and the negative electrode plate 17.

The gas accumulated between the positive electrode layer 162 and the separator 18 passes through the separator 18 and is absorbed by the gas absorbing material contained in the opposed negative electrode layer 172 via a short movement path. When the gas absorbing material is active carbon, the gas is adsorbed on pores of the active carbon.

Moreover, as indicated by arrows in Fig. 3, the gas accumulated between the positive electrode layer 162 and the separator 18 moves to between the negative electrode layer 172 of the negative electrode plate 17 in the outermost layer and an inner surface of the case body 3, and is absorbed by the gas absorbing material of the negative electrode layer 172 in the outermost layer.

As described above, in the present embodiment, the gas generated in the case 11 accompanying the charge-discharge reaction can be absorbed by the gas absorbing material of the negative electrode layer 172. The gas generated between the positive electrode layer 162 and the separator 18 and passed through the separator 18 can be also absorbed, and the gas can be efficiently absorbed by the negative electrode layer 172.

When the electrode assembly 13 is a wound type, the negative electrode plate 17 is arranged in an outermost part of the electrode assembly 13. The wound type is more likely to swell than the stacked type, but swelling is favorably suppressed since the negative electrode layer 172 contains a gas absorbing material.

### (Second Embodiment)

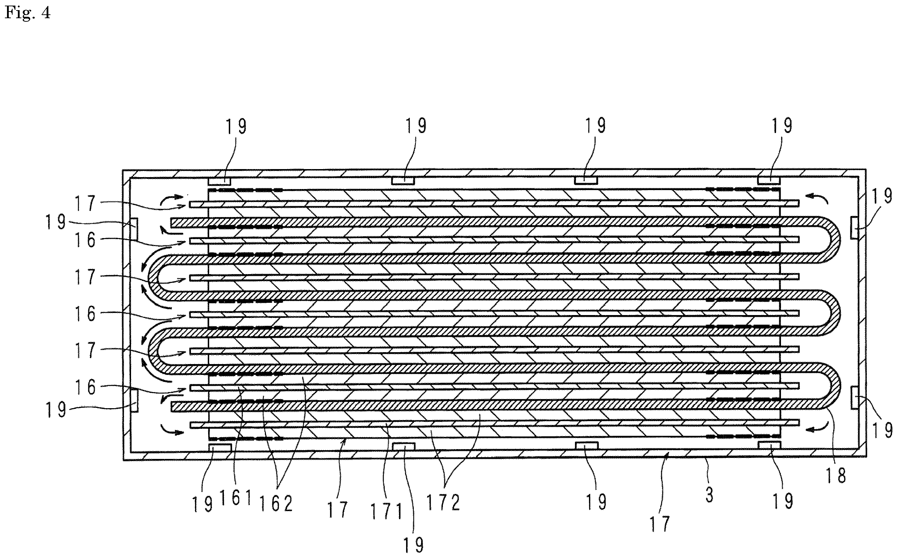

Fig. 4 is a cross-sectional view of an energy storage device of a second embodiment. The same parts as those in Fig. 3 are denoted by the same reference numerals, and detailed description is omitted.

In the energy storage device of the second embodiment, a plurality of sheet-shaped gas absorbing materials 19 made of the same material as described above are arranged on an inner surface of the case body 3.

The shape of the gas absorbing material 19 is not limited to a sheet shape, but may be a flake shape, a spherical shape, a rod shape, or a plate shape.

It is preferable that the gas absorbing material 19 is arranged on the inner surface of the case body 3 before the above-described drying step, and that the absorbed gas is removed together with the gas absorbing material contained in the electrode assembly 13 during drying.

In the present embodiment, gas is better absorbed when the energy storage device is used.

### (Third Embodiment)

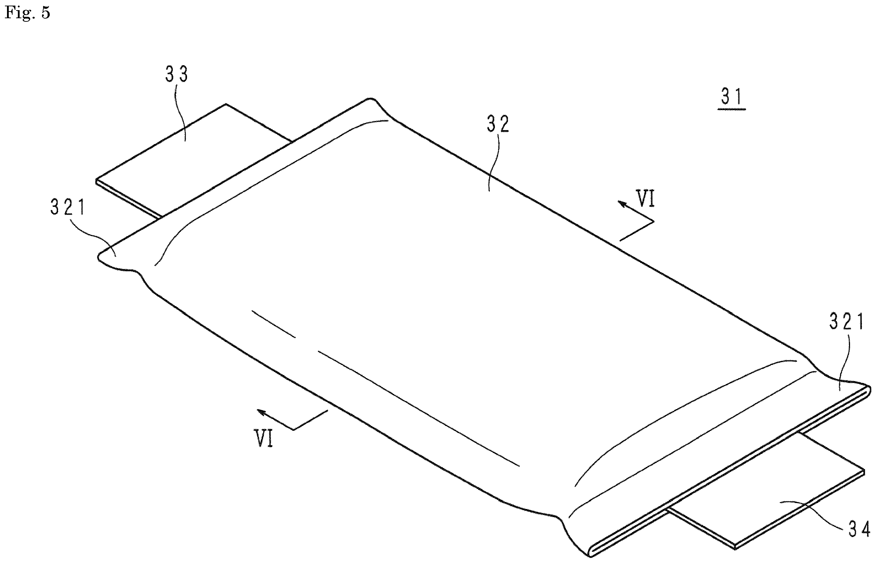

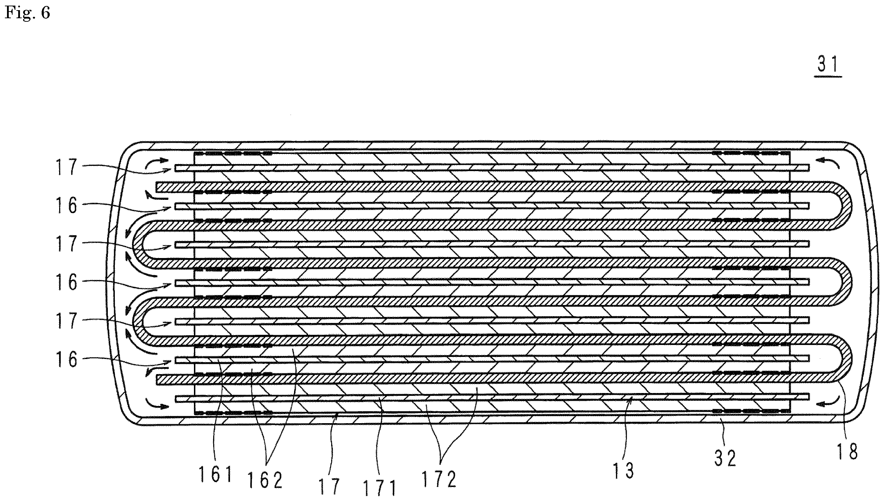

Fig. 5 is a perspective view of an energy storage device 31 of a third embodiment, and Fig. 6 is a sectional view taken along line VI-VI of Fig. 5.

The case 32 of the energy storage device 31 of the third embodiment is configured by sealing both ends of a cylindrical laminate film composed of a plurality of layers. The case 32 has sealing portions 321 formed by joining the ends of the laminate films to each other at both ends. The laminate film has, for example, a three-layer structure in which a base film layer is laminated on one surface of a metal layer and a sealant layer is laminated on the other surface. The sealant layer is a layer of a thermoplastic resin such as PP. The thickness of the sealant layer is, for example, any value of 50 pm to 400 µm, and more preferably any value of 100 pm to 300 pm.

The sealing portion 321 may be formed by joining the ends of one tubular sheet to each other, or may be formed by joining the ends of two sheets to each other. That is, the case 32 may be composed of a plurality of sheets.

Each of a positive electrode lead plate 33 and a negative electrode lead plate 34 connected to the electrode assembly 13 is exposed from the case 32 while penetrating the sealing portion 321. Electric power from the electrode assembly 13 is supplied to a device electrically connected to the positive electrode lead plate 33 and the negative electrode lead plate 34.

As shown in Fig. 6, the case 32 using the laminate film can store the stacked type electrode assembly 13 that easily radiates heat and easily outputs current. This case 32 has a higher degree of freedom in shape and a higher gravimetric energy density than a metal can case. Therefore, the energy storage device 31 is also suitable for use in vehicles. However, since the central part has a shape convex upward, there is a problem that the energy storage device 31 easily swells.

In the present embodiment, a part of one sealing part 321 is left unsealed, and the drying step is performed by evacuating from the part similarly as described above. After drying, an electrolyte solution is filled from the above-mentioned part, and the part is sealed to prepare the energy storage device 31.

After the production of the energy storage device 31, the gas generated by the decomposition reaction of the main solvent and the additive of the electrolyte solution accompanying a charge-discharge reaction tends to accumulate between the positive electrode layer 162 and the separator 18, as indicated by thick lines in Fig. 6. Although gas is also present at a center of the positive electrode plate 16, Fig. 6 shows only one in which gas is present at both ends of the positive electrode plate 16 and the negative electrode plate 17.

The gas accumulated between the positive electrode layer 162 and the separator 18 passes through the separator 18 and is absorbed by the gas absorbing material contained in the opposed negative electrode layer 172 via a short movement path. When the gas absorbing material is active carbon, the gas is adsorbed on pores of the active carbon.

Moreover, as indicated by arrows in Fig. 6, the gas accumulated between the positive electrode layer 162 and the separator 18 moves to between the negative electrode layer 172 of the negative electrode plate 17 in the outermost layer and an inner surface of the case 32, and is absorbed by the gas absorbing material of the negative electrode layer 172.

In the present embodiment, swelling of the case 32 having a laminate structure in which swelling is likely to occur is favorably suppressed.

### EXAMPLES

Hereinafter, examples of the present invention will be specifically described. However, the present invention is not limited to the examples.

### [Example 1]

### (Preparation of Positive Electrode Plate 16)

The positive active material, acetylene black (AB) and polyvinylidene fluoride (PVdF) were mixed at a mass ratio of 90 : 5 : 5.

This mixture was mixed and dispersed by adding N-methylpyrrolidone as a dispersion medium to prepare a paste. PVdF was converted to a solid mass by using a liquid in which a solid content was dissolved and dispersed. The paste was applied to both sides of a 15 µm-thick aluminum substrate 161 and dried. The positive electrode coating mass was 10.5 mg/cm². Next, the positive electrode plate 16 was prepared by roll pressing.

### (Preparation of Negative Electrode Plate 17)

Using ion-exchanged water as a dispersion medium, a negative electrode paste in which graphite as a negative active material, active carbon with a pore diameter of 0.7 nm or less, carboxymethyl cellulose (CMC) and styrene butadiene rubber (SBR) were mixed and dispersed at a mass ratio of 96 : 1 : 1 : 2 was prepared. The negative electrode paste was applied to both surfaces of a 10 pm-thick copper foil current collector substrate and dried. The negative electrode coating mass was 14.0 mg/cm².

Next, the negative electrode plate 17 was prepared by roll pressing.

As a nonaqueous electrolyte, LiPF₆ that is an electrolyte salt, was dissolved in a mixed solvent having a volume ratio of EC/EMC/DEC of 3 : 2 : 5 to a concentration of 1 mol/L, and a solution obtained by dissolving diglycol sulfate (DGLST) so as to be 0.01% by mass with respect to the mass of this nonaqueous electrolyte was used.

The electrode assembly 13 was prepared by the above-described production method, and the electrode assembly 13 connected to the cover plate 2 was stored in the case body 3, and an edge of the cover plate 2 and an edge of an opening of the case body 3 were laser-welded. After the temperature of the negative electrode plate 17 was raised to 100°C or more using nitrogen, the drying step was performed in a state of a reduced pressure of an atmospheric pressure or less by evacuation from the electrolyte solution filling hole 21. After drying, the electrolyte solution was filled from the electrolyte solution filling hole 21 and the electrolyte solution filling hole 21 was closed with the plug 211 to obtain the energy storage device 1 of Example 1 having a capacity of 40 Ah.

### [Comparative Example 1]

An energy storage device of Comparative Example 1 was prepared similarly as in Example 1, except that the negative electrode layer 172 did not contain a gas absorbing material.

### [Observation of Swelling]

With respect to the energy storage device 1 of Example 1 and the energy storage device of Comparative Example 1, swelling after being left at 45°C for one month was observed.

In Comparative Example 1, a swelling of 2 mm was observed, but in Example 1, no swelling was observed.

From the above, it was confirmed that the energy storage device 1 of the present example absorbed the gas generated in the case 11 accompanying a charge-discharge reaction by the gas absorbing material of the negative electrode layer 172, and the swelling was favorably prevented.

The present invention is not limited to the contents of the above-described embodiments, and various modifications can be made within the scope of the claims. That is, embodiments obtained by combining technical means appropriately altered within the scope of the claims are also included in the technical scope of the present invention.

In the first to third embodiments, the case where the positive electrode terminal 4 and the negative electrode terminal 8 of the energy storage device 1 are arranged so as to face upward has been described, but the present invention is not limited thereto. Even when the positive electrode terminal 4 and the negative electrode terminal 8 are arranged so as to face sideways, the gas absorption structure of the present invention can be applied.

Although the case where the gas absorbing material is contained in the negative electrode has been described, the gas absorbing material may be contained in components other than the negative electrode. For example, a gas absorbing member formed into a plate or rod shape by mixing a gas absorbing material and a synthetic resin such as PTFE may be provided in the outer case.

Further, the case where the energy storage device 1 is a lithium ion secondary battery has been described, but the energy storage device 1 is not limited to a lithium ion secondary battery. The energy storage device 1 may be a primary battery or an electrochemical cell such as a capacitor.

### DESCRIPTION OF REFERENCE SIGNS

- 1: Energy storage device
- 2: Cover plate
- 3: Case body
- 4: Positive electrode terminal
- 8: Negative electrode terminal
- 5, 9: Insulating plate
- 6, 10: Gasket
- 11: Case
- 7, 12: Current collector
- 13: Electrode assembly
- 14: Positive electrode tab
- 15: Negative electrode tab
- 16: Positive electrode plate (positive electrode in claims)
- 161: Substrate
- 162: Positive electrode layer
- 17: Negative electrode plate (negative electrode in claims)
- 171: Substrate
- 172: Negative electrode layer
- 19: Gas absorber
- 20: Rupture valve
- 21: Electrolyte solution filling hole
- 211: Plug

## Claims

1. A method for producing an energy storage device including an electrode assembly having a positive electrode containing an active material, a separator, and a negative electrode containing an active material, an electrolyte solution, and an outer case, comprising:
a step of storing the electrode assembly in the outer case;
a drying step of drying the electrode assembly through an electrolyte solution filling hole formed in the outer case by arranging the energy storage device in a space for drying; and
a step of filling the electrolyte solution into the outer case through the electrolyte solution filling hole.

2. The method for producing an energy storage device according to claim 1, wherein in the drying step, a gas absorbing material provided in the outer case is dried at the same time as the electrode assembly is dried.

3. The method for producing an energy storage device according to claim 1 or 2, wherein the gas absorbing material releases an absorbed gas at a temperature of 100°C or more and less than 120°C.

4. The method for producing an energy storage device according to any one of claims 1 to 3, wherein in the drying step, after raising the temperature of the negative electrode to 100°C or more using air or nitrogen, the electrode assembly is dried in a state of a reduced pressure of an atmospheric pressure or less.

5. An energy storage device comprising an electrode assembly having a positive electrode containing an active material, a separator, and a negative electrode containing an active material, an electrolyte solution, and an outer case, wherein
the negative electrode contains a gas absorbing material,
the outer case has an electrolyte solution filling hole for filling the electrolyte solution, and
the gas absorbing material is dried from the outside of the outer case through the electrolyte solution filling hole.

6. The energy storage device according to claim 5, wherein the gas absorbing material releases an absorbed gas at a temperature of 100°C or more and less than 120°C.
